# EUROPEAN PATENT APPLICATION

(11) **EP 0 864 776 A1**
(43) Date of publication of application: **16.09.1998**
(21) Application number: 98103082.8
(22) Date of filing: 21.02.1998
(51) Int. Cl.: F16G 13/06, B65G 17/38

(54) **Conveyor chain using an oil impregnated sintered bushing**

(30) Priority: 11.03.1997 JP 56231/97
(71) Applicant: TSUBAKIMOTO CHAIN CO., Osaka-fu 538 (JP)
(72) Inventor: Murano, Tetsuya, Katano-shi, Osaka-fu (JP)
(74) Representative: Naumann, Ulrich, Dr.-Ing.

(57) **Abstract**

[PROBLEM] To provide a conveyor chain using an oil impregnated sintered bushing which is high in durability and low in manufacturing cost by which the abrasion of the outer peripheral surface of the oil impregnated sintered bushing and the inner peripheral surface of the roller is reduced, and the sliding noise generated between the roller and the oil impregnated sintered bushing and the burning therebetween can be prevented.
[SOLVING MEANS] A conveyor chain 1 using an oil impregnated sintered bushing 2 in which a roller 6 is rotatably fitted over the oil impregnated sintered bushing, characterized in that the oil impregnated sintered bushing has a sintering density in the range of from 6.0 g/cm³ to 7.1 g/cm³, and at least an inner peripheral surface in contact with an outer peripheral surface of said oil impregnated sintered bushing of the roller 6 is formed of resin.

## Description

### [DETAILED DESCRIPTION OF THE INVENTION]

### [0001]

### [INDUSTRIAL FIELD]

The present invention relates to a conveyor chain using an oil unpregnated sintered bushing in which an oil impregnated sintered bushing is used for a bushing having a roller fitted thereover.

### [0002]

### [RELATED ART]

In the past, for a roller chain using an oil impregnated sintered bushing as described, for example, in Japanese Utility Model Application Laid-Open No. Hei 1-149048 Publication, steel rollers made of materials such as S15C and SCM435 are used. However, when a conveyor chain is manufactured by combining such a steel roller with the oil impregnated sintered bushing as it is, fine abraded metal powder generated on the inner surface of the roller is mixed into lubricating oil during the use to deteriorate lubricating oil, and the abraded metal powder floating in the lubricating oil is adhered to and accumulated on the outer peripheral surface of the oil impregnated sintered bushing to block fine oil impregnated pores opened therein, thus posing a problem in that the lubricating performance lowers so that the abrasion of the oil impregnated sintered bushing progresses early.

### [0003]

In view of the foregoing, in the past, nickel plating or hard chrome plating or curing treatment is applied to the surface of the roller to suppress the generation of the abraded metal powder thereby enhancing the abrasion resistance of the oil impregnated sintered bushing and enhancing the life of the chain.

### [0004]

### [PROBLEM TO BE SOLVED BY THE INVENTION]

However, even if the plating or curing treatment as mentioned above is applied to the roller, there is less effect of reducing the abrasion of the oil impregnated sintered bushing, and the abrasion of the outer peripheral surface of the oil impregnated sintered bushing is not much improved. Moreover, since the step of applying the plating treatment to the roller in the process of manufacturing chain is high in cost, the manufacturing cost of the chain is high. This high cost portion has not been sufficiently reflected in the merit of enhancing the life of the chain.

### [0005]

Further, when the abrasion of the outer peripheral surface of the oil impregnated sintered bushing progresses, an oil-film cut occurs between it and the inner peripheral surface of the roller so that the abrasion is further accelerated. Further, the sliding noise of the contact surfaces occurs between the oil impregnated sintered bushing and the roller, and burning occurs therebetween.

### [0006]

In view of the foregoing, the present invention solves the problem of prior art as mentioned above and provides a conveyor chain using an oil impregnated sintered bushing which is high in durability and low in manufacturing cost by which the abrasion of the outer peripheral surface of the oil impregnated sintered bushing and the inner peripheral surface of the roller is reduced, and the sliding noise generated between the roller and the oil impregnated sintered bushing and the burning therebetween can be prevented.

### [0007]

### [MEANS FOR SOLVING THE PROBLEM]

For achieving the aforesaid object, the present invention provides a conveyor chain using an oil impregnated sintered bushing in which a roller is rotatably fitted over the oil impregnated sintered bushing, wherein the oil impregnated sintered bushing has a sintering density in the range of from 6.0 g/cm³ to 7.1 g/cm³, and at least an inner peripheral surface in contact with an outer peripheral surface of said oil impregnated sintered bushing of the roller is formed of resin.

### [0008]

### [FUNCTION]

Since the oil impregnated sintered bushing has a sintering density in the range of from 6.0 g/cm³ to 7.1 g/cm³, both practical mechanical strength and oil impregnated performance are provided. Further, since at least an inner peripheral surface in contact with an outer peripheral surface of said oil impregnated sintered bushing of the roller is formed of resin, the roller will not generate fine abraded metal powder to deteriorate lubricating oil to deteriorate lubricating oil so that an excellent lubricating state is maintained to prevent burning between the roller and the oil impregnated sintered bushing and occurrence of sliding noises during the rotation of the roller.

Moreover, since the inner peripheral surface of the roller itself in sliding contact with the outer peripheral surface of the oil impregnated sintered bushing has a high self-lubricating property, the abrasion of the outer peripheral surface of the oil impregnated sintered bushing and the inner peripheral surface of the roller is suppressed to enhance the life of the chain.

### [0009]

### [EMBODIMENT]

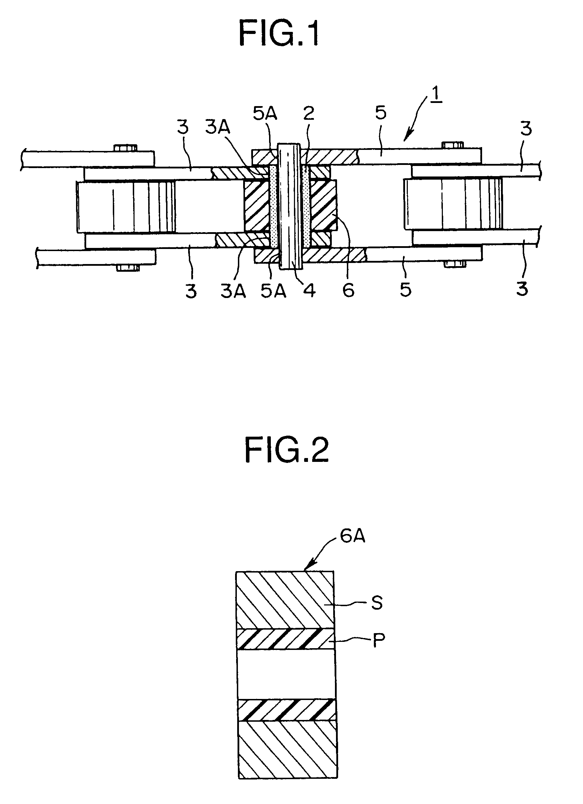

An embodiment of the present invention will be described hereinafter with reference to the drawings. FIG. 1 shows one embodiment of a conveyor chain using an oil impregnated sintered bushing. In a conveyor chain using an oil impregnated sintered bushing 1 (hereinafter merely referred to as a chain 1), outer peripheries on both ends of a hollow cylindrical oil impregnated sintered bushing 2 are respectively fitted in and secured to bushing holes 3A of a pair of inner plates 3, and both ends of a pin 4 rotatably inserted into the bushing 2 are fitted in and secured to pin holes 5A of outer plates 5 arranged on both external sides of the pair of inner plates 3.

### [0010]

Between the pair of opposed inner plates, a roller 6 is rotatably fitted over the oil impregnated sintered bushing 2. The roller 6 has the larger outside diameter which projects more than the width of the inner plate 3 and the outer plate 5, and carries an article to be transported on the outer peripheral surface to transport it, in a horizontal running path of the chain 1.

### [0011]

The oil impregnated sintered bushing 2 has a tendency that when sintering density thereof is made small, the oil impregnated performance enhances but mechanical strength lowers, whereas when the sintered density is made large, the mechanical strength becomes higher but the oil impregnated performance lowers. Therefore, there is used the oil impregnated sintered bushing which has both practically sufficient mechanical strength and oil impregnated performance and has the sintering density in the range of from 6.0 g/cm³ to 7.1 g/cm³.

### [0012]

On the other hand, as material for the roller 6 fitted over the oil impregnated sintered bushing 2, resin such as engineering plastics having a high mechanical strength is used. Generally, polyoxymethylene, polyamide and the like are used in terms of mechanical strength and abrasion resistance, and in case of requiring the heat resistance, polyphenyrenesulfide, polyethermide, polyvinylidene fluoride and the like are used.

### [0013]

Further, FIG. 2 is a sectional view of a roller according to a further embodiment of the conveyor chain using an oil impregnated sintered bushing of the present invention. A roller 6A is of a concentric 2-layer construction. An outer peripheral portion S made of metal is fitted externally of a bearing portion P made of resin rotatably fitted over the oil impregnated sintered bushing.

### [0014]

The bearing portion P made of resin is formed of a resin material similar to the roller 6 in the aforementioned embodiment. As material for the outer peripheral portion S made of metal, carbon steel and alloy steel (for example, chrome molybdenum, stainless steel, etc.), and non-ferrous metal such as aluminum can be used. In this embodiment, other members constituting the chain not shown used are those similar to the aforementioned embodiment shown in FIG. 1.

### [0015]

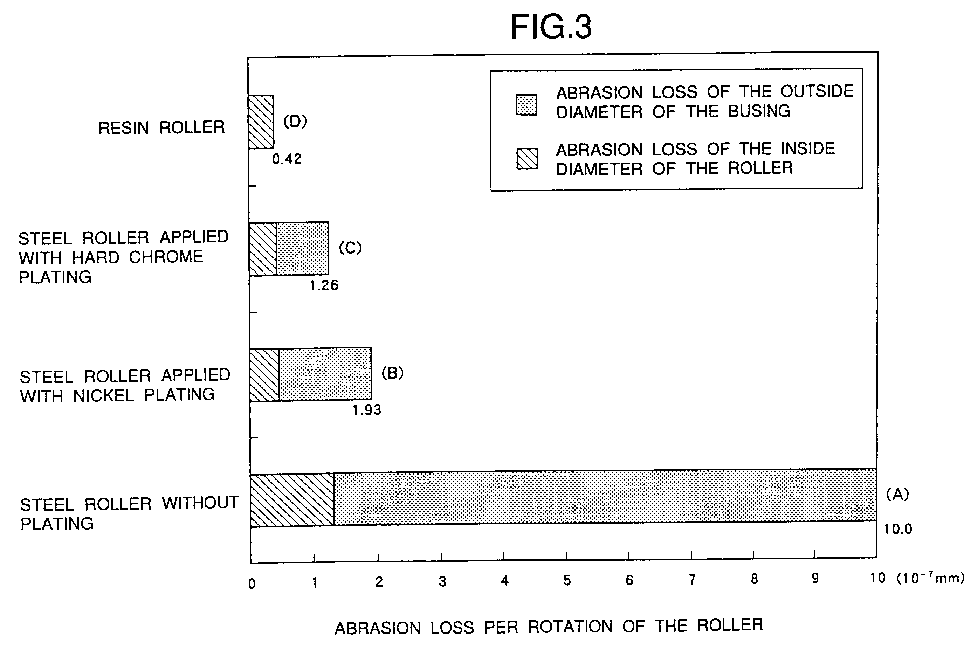

FIG. 3 shows the results of the abrasion test of the oil impregnated sintered bushing and the roller in connection with the conveyor chain using an oil impregnated sintered bushing according to the present invention and various conventional conveyor chains using an oil impregnated sintered bushing.

For the abrasion test, an oil impregnated sintered article having 12.25 mm of outside diameter, 8.05 mm of inside diameter, 24.28 mm of width, and 6.0 g/cm³ to 6.3 g/cm³ of sintering density is used for the oil impregnated sintered bushing.

### [0016]

As rollers used for the test, there are used four kinds of rollers, all of which have the same shape having 31.8 mm of outside diameter, 12.76 mm of inside diameter, and 15.5 mm of width, namely, (A) a steel roller of a hardened article corresponding to SCM 435, (B) a steel roller in which nickel plating is applied to a hardened article corresponding to SCM 435, (C) a steel roller in which hard chrome plating is applied to a hardened article corresponding to SCM 435, and (D) a resin roller entirety of which is formed of polyoxymethylene. Each of various rollers is fitted over the oil impregnated sintered bushing for the abrasion test.

### [0017]

Although not shown, the abrasion test was conducted in such a manner that in consideration of actual load conditions of the conveyor chain, an oil impregnated sintered bushing having each of various rollers fitted thereover is secured to a lever having one end oscillatorily mounted on a fixed support portion, and the outer peripheral surface of the roller is pressed against the outer peripheral surface of the rotary drum having 400 mm of outside diameter with 40 kgf by a weight suspended on the other end of the lever, in which state, the rotary drum is driven by a motor so that the roller is friction-driven relative to the oil impregnated sintered bushing secured to the lever by the rotary drum and rotated for a predetermined time at 30 m/min of roller surface speed.

### [0018]

After the stoppage of the rotary drum, the abrasion loss of the inside diameter of various rollers and the outside diameter of the oil impregnated sintered bushing was measured to calculate the abrasion loss of the outside diameter of the bushing and the inside diameter of the roller per rotation of the roller from the total number of revolutions of the rotary drum.

### [0019]

As shown in FIG. 3, in the case where the steel roller (A) is combined with the oil impregnated sintered bushing, both outside diameter of the oil impregnated sintered bushing and inside diameter of the roller are large in abrasion loss. In the case where the steel roller (B) applied with nickel plating is used, the total abrasion loss of the inside diameter of the roller and the outside diameter of the oil impregnated sintered bushing was reduced to approximately 1/5 as compared with the steel roller (A), and in the case where the steel roller (C) applied with hard chrome plating is used, the total abrasion loss was further reduced to approximately 1/8 of the steel roller (A).

### [0020]

Further, in the case where the roller (D) made of resin is used, the abrasion loss of the outside diameter of the oil impregnated sintered bushing was reduced to 0 (less than the measured limit value). The abrasion loss of the inside diameter of the roller was less than that of any other rollers. The total abrasion loss between the inside diameter of the roller and the outside diameter of the oil impregnated sintered bushing was reduced to approximately 1/24 as compared with the steel roller (A).

### [0021]

### [EFFECT OF THE INVENTION]

As described above, according to the conveyor chain using an oil impregnated sintered bushing of the present invention, since the sintering density in the range of from 6.0 g/cm³ to 7.1 g/cm³ is used for the oil impregnated sintered bushing, the practical abrasion resistance, strength and oil impregnated performance are obtained.

### [0022]

Further, since at least the inner peripheral surface in contact with the outer peripheral surface of the oil impregnated sintered bushing of the roller fitted over the oil impregnated bushing is formed of resin, the roller will not generate fine abraded metal powder to deteriorate lubricating oil so that an excellent lubricating state is maintained to prevent burning between the roller and the oil impregnated sintered bushing and occurrence of sliding noises during the rotation of the roller, providing quiet and smooth running of the chain.

Moreover, since the inner peripheral surface of the roller itself in sliding contact with the outer peripheral surface of the oil impregnated sintered bushing has a high self-lubricating property, the abrasion of the outer peripheral surface of the oil impregnated sintered bushing and the inner peripheral surface of the roller is suppressed to enhance the durable life of the chain.

### [0023]

Further, since the steps of expensive plating treatment and curing treatment of the roller can be omitted during the manufacture of the chain, the manufacturing cost of the chain can be lowered.

### [BRIEF DESCRIPTION OF THE DRAWINGS]

FIG. 1 is a view showing one embodiment of a conveyor chain using an oil impregnated sintered bushing according to the present invention.

FIG. 2 is a sectional view of a roller in a further embodiment of the conveyor chain using an oil impregnated sintered bushing according to the present invention.

FIG. 3 is a view showing the results of the abrasion test of the oil impregnated sintered bushing and various rollers.

## Claims

1. A conveyor chain using an oil impregnated sintered bushing in which a roller is rotatably fitted over the oil impregnated sintered bushing, characterized in that the oil impregnated sintered bushing has a sintering density in the range of from 6.0 g/cm³ to 7.1 g/cm³ and at least an inner peripheral surface in contact with an outer peripheral surface of said oil impregnated sintered bushing of the roller is formed of resin.
